# EUROPEAN PATENT SPECIFICATION

(11) **EP 4 439 801 B1**
(45) Date of publication and mention of the grant of the patent: **02.09.2026**
(21) Application number: 23214227.3
(22) Date of filing: 05.12.2023
(51) Int. Cl.: H01M 10/653, H01M 10/658, H01M 50/293

(54) **BATTERY MODULE INCLUDING COMPOSITE MICA INSULATION PAD WITH IMPROVED FIRE RESISTANCE AND THERMAL DIFFUSIVITY**
BATTERIEMODUL MIT VERBUNDGLIMMERISOLATIONSPAD MIT VERBESSERTER FEUERBESTÄNDIGKEIT UND VERBESSERTEM TEMPERATURLEITFÄHIGKEIT
MODULE DE BATTERIE COMPRENANT UN TAMPON ISOLANT EN MICA COMPOSITE PRÉSENTANT UNE RÉSISTANCE AU FEU ET UNE DIFFUSIVITÉ THERMIQUE AMÉLIORÉES

(30) Priority: 31.03.2023 KR 20230042696
(43) Date of publication of application: 02.10.2024
(73) Proprietor: Hyundai Mobis Co., Ltd., Gangnam-gu Seoul 06141 (KR); Sweco Inc., Hwaseong-si, Gyeonggi-do 18298 (KR)
(72) Inventor: KI, Won Yong, 16891 Yongin-si, Gyeonggi-do (KR); LEE, Keun Hyung, 16891 Yongin-si, Gyeonggi-do (KR); LEE, Kyung Ho, 06288 Seoul (KR); LEE, Joo Ho, 06317 Seoul (KR)
(74) Representative: Frenkel, Matthias Alexander

(56) References cited:
- US-A1- 2021 074 960
- US-A1- 2021 257 690
- US-A1- 2021 376 405
- US-A1- 2023 057 172

## Description

### CROSS-REFERENCE TO RELATED APPLICATION

This application claims priority to and the benefit of Korean Patent Application No. 2023-0042696, filed on March 31, 2023.

### BACKGROUND

### 1. Field of the Invention

The present invention relates to a battery module including an insulating pad having a multi-layer structure with improved fire resistance and thermal diffusivity between battery cells.

### 2. Discussion of Related Art

Recently, the need to ensure safety against fires in battery packs of electric vehicles is increasing. Accordingly, the development of technology to apply fire retardants or fire extinguishing materials within battery packs to prevent fires is in progress. In the case of prismatic or cylindrical batteries, positive and negative electrode materials are present together in a battery case and the case is thick so that heat transfer between cells is relatively small, whereas in the case of pouch cell batteries, there is a problem that heat transfer easily occurs when the temperature inside the cell rises because positive and negative electrode materials are present in a thin aluminum foil.

In order to solve the above problem, a technique, in which the external leakage of flames is prevented by applying a structure in which cells are stacked and then the stacked cells are surrounded in order to delay heat transfer from pouch cell batteries, has been proposed. In addition, a structure in which a fire extinguishing liquid is sprayed on the outside of a module to prevent flames has been also proposed.

In this way, the related art focused on preventing flame exposure at a level of the pack rather than the module by applying a fire retardant within the pack. In this case, when the capacity of the battery cell increases, the extent of the flame also increases, and thus a greater amount of fire retardant or fire extinguishing material may be required to expose the flame to the outside, or a situation where the flame cannot be prevented may occur.

Further, the related art may not be applicable due to the internal package space, or the battery mounting space may be insufficient due to the increased fire retardants or fire extinguishing materials. In addition, it was impossible to apply conventional fire retardants between battery cells, and this is because there was a limitation in the material used to absorb cell swelling. In addition, there was a problem that conventional pads that are used to absorb cell swelling cracked or melted when exposed to high temperatures.

Therefore, the development of insulating pads made of new materials that can be applied between pouch battery cells and have excellent fire resistance and thermal diffusivity is required.

US 2021/257690 A1 discloses an assembly for a battery including a thermal management multilayer sheet disposed on a surface of an electrochemical cell, the thermal management multilayer sheet including a thermally-insulating layer, a first heat-spreading layer disposed on a first side of the thermally-insulating layer, and a second heat-spreading layer disposed on a second side of the thermally-insulating layer. In another example, the thermal management multilayer sheet includes a compressible thermally-insulating layer and first and a second high temperature laminate, each being disposed on opposite sides of the compressible thermally-insulating layer, and further includes a heat spreading layer and an integrity layer. The compressible thermally-insulating layer is a compressible polymer foam. When the thermally-insulating layer is not compressible, or does not have reliable or sufficient compression-set values, it can be advantageous to use a pressure pad in conjunction with the thermal management multilayer.

### SUMMARY OF THE INVENTION

The present invention is directed to providing a battery module having an insulating pad that simultaneously delays heat transfer from a pouch cell battery and prevents swelling pressure transfer caused by cell swelling.

The present invention is also directed to providing a battery module including an insulating pad with excellent fire resistance and thermal diffusivity.

The present invention is also directed to providing a technique in which, by developing an insulating pad that is applicable between pouch cells, costs are reduced and space is secured inside the battery pack by minimizing the application of other fire retardants or fire extinguishing materials within a battery pack.

According to an aspect of the present invention, there is provided a battery module, as defined in claim 1, which includes a plurality of battery cells, and an insulating pad having a multi-layer structure disposed between the battery cells, wherein the insulating pad includes a swelling pressure absorption layer, an insulating fire-resistant layer, and a thermal diffusion layer.

In the insulating pad, the swelling pressure absorption layer includes heat-resistant fiber and mica, the insulating fire-resistant layer may include mica, and the thermal diffusion layer may include a carbon-based material.

The carbon-based material may be one or more selected from among graphene, carbon nanotubes, and graphite.

A thickness of the swelling pressure absorption layer may be in a range of 10 to 35% of a total thickness of the insulating pad, a thickness of the insulating fire-resistant layer may be in a range of 35 to 45% of the total thickness of the insulating pad, and a thickness of the thermal diffusion layer may be in a range of 25 to 35% of the total thickness of the insulating pad. The total thickness of the insulating pad may range from 1.0 to 2.5 mm.

The arrangement of the multi-layer structure of the insulating pad may be modified in various ways, and may be configured by stacking the thermal diffusion layer and the insulating fire-resistant layer in a different order around the swelling pressure absorption layer or configured asymmetrically by stacking another layer on both side surfaces of the swelling pressure absorption layer.

The insulating pad having a multi-layer structure disposed between the plurality of battery cells may have a structure in which thermal diffusion layers are stacked on both surfaces of the swelling pressure absorption layer and insulating fire-resistant layers are stacked on the thermal diffusion layers.

The insulating pad having a multi-layer structure disposed between the plurality of battery cells may have a structure in which insulating fire-resistant layers are stacked on both surfaces of the swelling pressure absorption layer and thermal diffusion layers are stacked on the insulating fire-resistant layers.

The insulating pad having a multi-layer structure disposed between the plurality of battery cells may have a structure in which an insulating fire-resistant layer and a thermal diffusion layer are sequentially stacked on one surface of the swelling pressure absorption layer and an insulating fire-resistant layer is stacked on the other surface of the swelling pressure absorption layer.

The insulating pad may be manufactured by stacking the swelling pressure absorption layer, the insulating fire-resistant layer, and the thermal diffusion layer and then performing heat pressing and heat fusing on the swelling pressure absorption layer, the insulating fire-resistant layer, and the thermal diffusion layer.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:

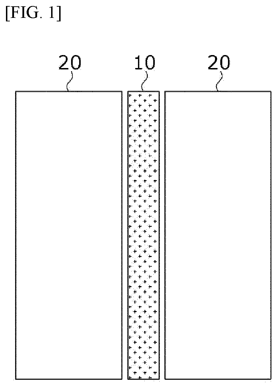

FIG. 1 is a cross-sectional view illustrating a structure of a battery module according to the related art;

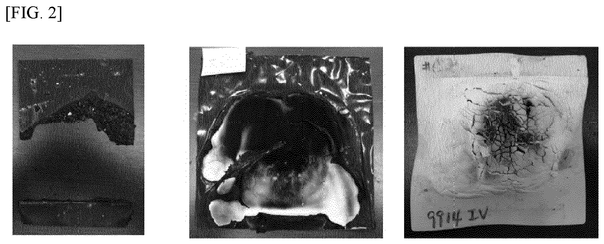

FIG. 2 is a set of photographs showing the results of a flame resistance test for a pad used in the battery module according to the related art;
FIG. 3 is a flowchart illustrating a process of preparing a heat-resistant fiber-mica composite according to an embodiment of the present invention;
FIG. 4 is a flowchart illustrating a process of manufacturing an insulating pad having a multi-layer structure according to an embodiment of the present invention;
FIG. 5 is a cross-sectional view illustrating a structure of a battery module according to an embodiment of the present invention;
FIG. 6 is a cross-sectional view illustrating a structure of a battery module according to another embodiment of the present invention;
FIG. 7 is a cross-sectional view illustrating a structure of a battery module according to still another embodiment of the present invention;
FIG. 8 is a graph showing the results of a fire resistance and thermal diffusivity test for an insulating pad according to an embodiment of the present invention;
FIG. 9 is a graph showing the results of a fire resistance and thermal diffusivity test for an insulating pad according to another embodiment of the present invention; and
FIG. 10 is a set of photographs showing the results of a flame resistance test for an insulating pad according to an embodiment of the present invention.

### DETAILED DESCRIPTION OF EXEMPLARY EMBODIMENTS

Hereinafter, the present invention will be described in more detail with reference to embodiments and the accompanying drawings. However, the following embodiments are intended only to aid understanding of the present invention, and the scope of the present invention is not limited thereto. The present invention may have various modifications and alternative forms, embodiments thereof may be implemented in several different forms, and it should be understood that the present invention covers all modifications falling within the scope of the present invention defined by the appended claims.

The terms used herein are for the purpose of describing specific embodiments only and are not intended to limit the present invention. As used herein, the singular forms "a" and "an" are intended to include the plural forms as well, unless the context clearly indicates otherwise. It will be further understood that the terms "comprise," "comprising," "include," and/or "including" used herein specify the presence of stated features, integers, steps, operations, elements, parts, or combinations thereof, but do not preclude the presence or addition of one or more other features, integers, steps, operations, elements, parts, or combinations thereof.

Unless otherwise defined, all terms including technical and scientific terms used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

A battery module according to an embodiment of the present invention includes a plurality of battery cells, and an insulating pad having a multi-layer structure disposed between the battery cells, wherein the insulating pad includes a swelling pressure absorption layer, an insulating fire-resistant layer, and a thermal diffusion layer.

The swelling pressure absorption layer includes heat-resistant fiber and mica, the insulating fire-resistant layer may include mica, and the thermal diffusion layer may include a carbon-based material.

The heat-resistant fiber includes ceramic fiber and aramid fiber.

The carbon-based material may be at least one selected from among graphene, carbon nanotubes, and graphite.

The thickness of the swelling pressure absorption layer may be in a range of 10 to 35% of the total thickness of the insulating pad, the thickness of the insulating fire-resistant layer may be in a range of 35 to 45% of the total thickness of the insulating pad, and the thickness of the thermal diffusion layer may be in a range of 25 to 35% of the total thickness of the insulating pad.

The total thickness of the insulating pad may range from 1.0 to 2.5 mm.

The arrangement of the multi-layer structure of the insulating pad may be modified in various ways, and may be configured by stacking the thermal diffusion layer and the insulating fire-resistant layer in a different order around the swelling pressure absorption layer or configured asymmetrically by stacking other layers on both side surfaces of the swelling pressure absorption layer.

The insulating pad having a multi-layer structure disposed between the plurality of battery cells may have a structure in which thermal diffusion layers are stacked on both surfaces of the swelling pressure absorption layer and the insulating fire-resistant layers are stacked on the thermal diffusion layers.

The insulating pad having a multi-layer structure disposed between the plurality of battery cells may have a structure in which the insulating fire-resistant layers are stacked on both surfaces of the swelling pressure absorption layer and the thermal diffusion layers are stacked on the insulating fire-resistant layer.

The insulating pad having a multi-layer structure disposed between the plurality of battery cells may have a structure in which the insulating fire-resistant layer and the thermal diffusion layer are sequentially stacked on one surface of the swelling pressure absorption layer and the insulating fire-resistant layer is stacked on the other surface of the swelling pressure absorption layer.

The insulating pad may be manufactured by stacking the swelling pressure absorption layer, the insulating fire-resistant layer, and the thermal diffusion layer and then performing heat pressing and heat fusing on the swelling pressure absorption layer, the insulating fire-resistant layer, and the thermal diffusion layer.

Materials used in the insulating pad having a multi-layer structure according to the present invention are as follows.

### <Mica>

Mica is a silicate mineral that is commonly found in igneous and metamorphic rock, and there are many types of micas. Mica has a complex chemical composition in terms of minerals. Micas are produced as hexagonal plate-shaped crystals and have the characteristic of being divided into very thin and tough plates.

In particular, mica can withstand high voltages due to its low electrical conductivity and high insulation strength (muscovite 1,500 to 3,000 volts/mill, phlogopite 1,000 to 1,500 volts/mill). Further, mica has the characteristics of low power loss (high Q factor), high resistance (1,015-1,016 ohm/cm for muscovite, 1,012 to 1,014 ohm/cm for phlogopite), and storage capacity stability, and has the ability to instantly store electrostatic energy because of a high dielectric constant (6 to 8 for muscovite, 5 to 6 for phlogopite). Due to these characteristics, mica is used in numerous electrical products such as condensers, transformers, rheostats, fuses, thermionic valve bridges, incandescent light bulbs, insulation materials for vacuum tubes, and the like.

In addition, mica is very difficult to compress, and is mainly used as optical fillers, windows of stoves and furnaces, retardation plates of helium-neon lasers, gauge glass of high-pressure steam boilers, and the like due to its chemical inertness that does not react with water, acids (except hydrofluoric acid and concentrated sulfuric acid), alkaline solutions, general solvents and oil, etc., flexibility, transparency, and high mechanical strength.

Further, since mica has natural structural stability, the mica is an ideal insulator with stability at high temperatures and high insulation strength. Such mica has curvature, elasticity, and high tensile strength, but is somewhat soft and can be cut by hand, and thus mica is processed into various shapes and used in various industries.

Since such mica contains many impurities in a mica ore state, the impurities are removed using a vibrating screen.

Then, a thermal process is performed on the mica ore from which impurities have been removed at a high temperature of 850 °C to remove organic substances and enable crystal water to evaporate inside the mica ore. When the crystal water evaporates from the mica ore, air flows into a plurality of spaces formed by the evaporation of the crystal water, and thus the thermal conductivity of the mica ore is significantly lowered and a heat insulating property is significantly improved.

When the mica ore is completely preprocessed in this way, the mica ore is grinded. There are various ways to grind mica ore, but an aspect ratio (i.e., a value obtained by dividing mica length by mica thickness) may be maximized using high-pressure water. In this way, when the aspect ratio is maximized, dielectric strength is improved to increase the dielectric breakdown voltage, and thus it is very advantageous for interlayer insulation of battery cells.

### <Heat-resistant fiber>

Aramid fiber or ceramic fiber is suitable for a heat-resistant fiber raw material. The heat-resistant fiber raw material is a mixture of the aramid fiber and ceramic fiber at an appropriate ratio.

Aramid fiber has excellent tensile strength, toughness, and heat resistance, and has high strength and a high modulus of elasticity, and thus does not break or damage easily. In particular, aramid fiber does not burn or melt, and turns black only when the temperature exceeds 500 °C. Further, since aramid fiber does not easily stretch even when a large external force is applied, the aramid fiber is widely used as reinforced plastic materials such as internal aggregates in aircraft, bulletproof jackets, bulletproof helmets, golf clubs, and tennis rackets.

Ceramic fiber is made by fiberizing glass, and has excellent heat resistance and is suitable for an insulator, and thus the ceramic fiber is mainly used as an insulating fire-resistant insulating material by being mixed with a metal or plastic.

It is preferable to dissociate and use the aramid fiber and ceramic fiber using a refiner so as to facilitate the dispersion and length adjustment of the fibers.

### <Carbon-based material>

In the present invention, the insulating pad disposed between the battery cells may include a thermal diffusion layer containing a carbon-based material. Examples of the carbon-based material that can be used include graphene, carbon nanotubes, graphite, and the like, but the present invention is not limited thereto.

### Example 1: Preparation of heat-resistant fiber-mica composite

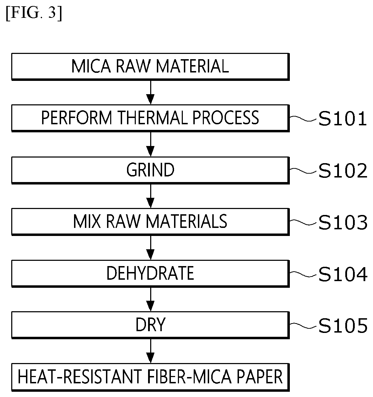

In order to manufacture a thermal expansion absorption layer constituting an insulating pad, mica and heat-resistant fiber were prepared and preprocessed as follows, and then a heat-resistant fiber-mica composite was prepared. FIG. 3 is a flowchart illustrating a process of preparing a heat-resistant fiber-mica composite according to an embodiment. Referring to FIG. 3, first, since mica in a mica ore state contains many impurities, the impurities were removed using a vibrating screen. Next, a thermal process was performed on the mica ore from which impurities have been removed at a high temperature of 850 °C to remove organic substances and enable crystal water to evaporate inside the mica ore (S101). When crystal water evaporates from the mica ore, air flows into a plurality of spaces formed by the evaporation of the crystal water, and thus the thermal conductivity of the mica ore is significantly lowered and a heat insulating property is significantly improved.

When the mica ore was completely preprocessed in this way, the mica ore was grinded (S102). There are various ways to grind mica ore, but an aspect ratio (i.e., a value obtained by dividing mica length by mica thickness) may be maximized using high-pressure water. In this way, when the aspect ratio is maximized, dielectric strength is improved to increase the dielectric breakdown voltage, and thus it is very advantageous for interlayer insulation of battery cells. In this example, the mica ore was used by being grinded to a size ranging from 100 to 800 µm. In this way, when the preprocessing and grinding of the mica ore were completed, the preparation of the mica raw material was completed.

A mixture of aramid fiber and ceramic fiber is used as the heat-resistant fiber. In this example, a mixture of ceramic fiber and aramid fiber was used, and the heat-resistant fiber was prepared by being dissociated using a refiner to facilitate the dispersion and length adjustment of the fiber.

The preprocessed mica and the dissociated heat-resistant fiber were prepared as described above, and a heat-resistant fiber-mica composite for manufacturing a swelling pressure absorption layer was prepared.

10 to 50 wt% preprocessed mica, 10 to 50 wt% dissociated ceramic fiber, and 10 to 40 wt% aramid fiber were mixed (S103). The mixture then dehydrated in a vacuum to remove as much moisture as possible (S104). The dehydrated mixture was heated and dried (S105) and then formed into a thin paper form to prepare a heat-resistant fiber-mica composite to be used in an insulating pad. The insulating heat-resistant fiber-mica composite prepared in this way has an advantage of excellent insulation and heat-resistant properties and significantly improved mechanical strength due to the mica and ceramic fiber.

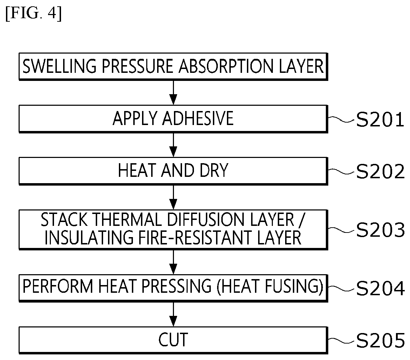

A mica sheet constituting an insulating fire-resistant layer and a graphite sheet constituting a thermal diffusion layer were also manufactured according to a process illustrated in FIG. 4 in the same manner as the method of preparing the heat-resistant fiber-mica composite.

### Example 2: Manufacture of insulating pad having multi-layer structure

An insulating pad 10 having a multi-layer structure disposed between battery cells 20 was manufactured. The insulating pad 10 includes a swelling pressure absorption layer 11, an insulating fire-resistant layer 13, and a thermal diffusion layer 12. The paper-type heat-resistant fiber-mica composite prepared in Example 1 was used as the swelling pressure absorption layer 11, a mica sheet was used as the insulating fire-resistant layer 13, and a graphite sheet made of a carbon-based material was used as the thermal diffusion layer 12.

FIG. 4 is a flowchart illustrating a process of manufacturing an insulating pad 10 having a multi-layer structure according to an embodiment.

Referring to FIG. 4, specifically, an adhesive was applied onto a surface of the heat-resistant fiber-mica composite formed into a paper form (S201), and a postprocessing process of heating and drying in a drying furnace at 80 to 180 °C was performed to prepare heat-resistant fiber-mica composite paper in a prepreg state (S202).

Examples of the adhesive used to manufacture the insulating pad may include organic adhesives such as silicone resin, epoxy resin, acrylic resin, unsaturated polyester resin, and ethyl vinyl acetate tape resin, and inorganic adhesives such as sodium silicate, potassium silicate, and lithium silicate.

In the case of organic adhesives, when the temperature is below 80 °C, the residual organic solvent contained in the adhesive is not removed, and when the temperature exceeds 180 °C, the adhesive is cured excessively, resulting in low flexibility, heat shrinkage, a significantly reduced heat insulating property, and no prepreg (semi-cured) state. Therefore, the organic adhesive should be heated and dried at the above set temperature.

Meanwhile, in the case of inorganic adhesives, when the temperature is below 80 °C, moisture contained in the adhesive does not evaporate, and when the temperature exceeds 180 °C, moisture rapidly evaporates and forms bubbles, and thus a bonding force is significantly weakened. Therefore, the inorganic adhesive should be heated and dried at the above set temperature.

When such a postprocessing process is performed, the bonding force between the mica raw material and heat-resistant fiber raw material is strengthened due to the adhesive applied to the surface, and thus it is possible to perform heat fusing in a semi-cured state.

A mica sheet and a graphite sheet were stacked on a ceramic mica composite prepreg (S203) that can be heat-fused, then heat fusing was performed by heating and pressing the mica sheet and graphite sheet at a temperature of 150 to 180 °C and a pressure of 2 to 10 kg/cm² (S204), and the mica sheet and graphite sheet were cut to the required size (S205), and thus an insulating pad with significantly improved fire resistance, thermal diffusivity, and mechanical strength was manufactured.

### Example 3: Manufacture of insulating pads having various layer arrangements

Insulation pads having various layer structures were manufactured by changing the arrangement of an insulating fire-resistant layer and a thermal diffusion layer, and were disposed between battery cells 20 to manufacture a battery module. The heat-resistant fiber-mica composite prepared in Example 2 was used as a swelling pressure absorption layer 11, a mica sheet was used as an insulating fire-resistant layer 13, and a graphite sheet made of a carbon-based material was used as a thermal diffusion layer 12.

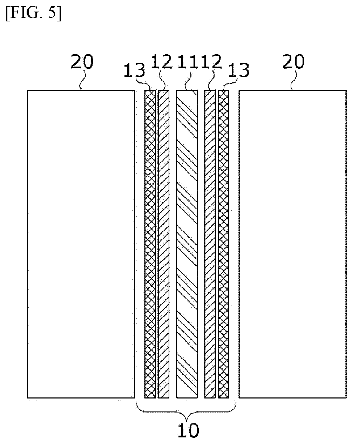

As illustrated in FIG. 5, an insulating pad in which thermal diffusion layers 12 were stacked on both surfaces of a swelling pressure absorption layer 11 and insulating fire-resistant layers 13 were stacked on the thermal diffusion layers 12 was manufactured, and was disposed between battery cells.

The total thickness of the insulating pad ranged from 1.0 to 2.5 mm, the thickness of the swelling pressure absorption layer 11 is 29% of the total thickness of the insulating pad, the thickness of the insulating fire-resistant layer 13 is 41% of the total thickness of the insulating pad, and the thickness of the thermal diffusion layer 12 is 29% of the total thickness of the insulating pad.

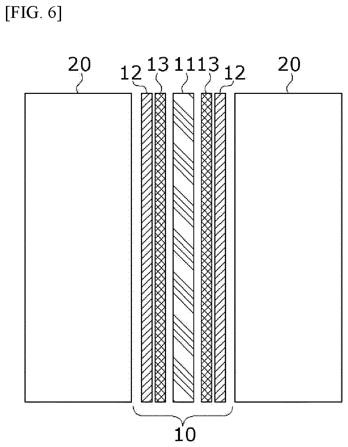

As another example illustrated in FIG. 6, an insulating pad having a multi-layer structure was manufactured by changing the arrangement order of insulating fire-resistant layers and a thermal diffusion layer. That is, an insulating pad in which insulating fire-resistant layers 13 were first stacked on both surfaces of the swelling pressure absorption layer 11 and thermal diffusion layers 12 were stacked on the insulating fire-resistant layers 13 was manufactured, and was disposed between battery cells.

In this way, even when the arrangement order of the insulation fire resistant layer and the thermal diffusion layer is changed, the performance of the insulating pad is similar.

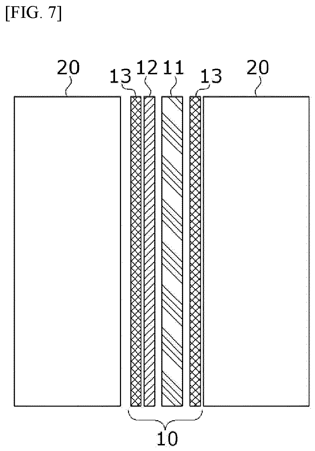

As still another example, an asymmetrical insulating pad was manufactured by changing the layer arrangement on both side surfaces of a swelling pressure absorption layer 11. As illustrated in FIG. 7, an insulating pad in which an insulating fire-resistant layer 13 was stacked on one surface of the swelling pressure absorption layer 11, a thermal diffusion layer 12 was stacked on the other surface of the swelling pressure absorption layer 11, and an insulating fire-resistant layer 13 was stacked on the thermal diffusion layer 12 was manufactured. In this way, even when the insulating fire-resistant layer and the thermal diffusion layer are arranged asymmetrically and manufactured, the performance of the insulating pad is similar.

### Test examples: Measurement results of fire resistance and thermal diffusivity

A 1,200 °C flame was applied for 10 minutes to insulating pads manufactured according to examples and comparative examples having compositions shown in Table 1 below, and then backside temperatures were measured to evaluate fire resistance and thermal diffusivity.

**[Table 1]**

| | First layer | Second layer | Third layer |
|---|---|---|---|
| Example 1 | Mica | Ceramic fiber-mica | Carbon-based material (graphite) |
| Comparative Example 1 | Mica | Ceramic fiber-mica | |
| Comparative Example 2 | Mica | Silicone | |
| Comparative Example 3 | Mica | Silicone | Carbon-based material (graphite) |

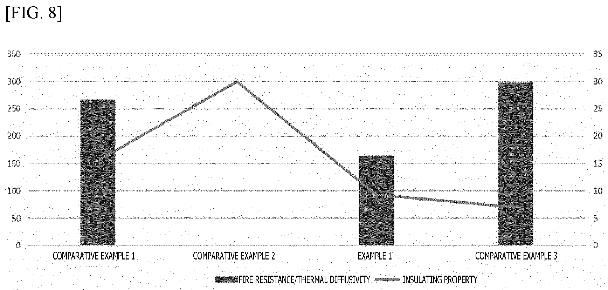

The evaluation results of the examples and comparative examples in Table 1 above are shown in the graph of FIG. 8. As shown in FIG. 8, although the mica/silicone structure of Comparative Example 1 had an excellent insulating property, the mica/silicone structure burned down, making it impossible to measure fire resistance and thermal diffusivity.

It was evaluated that an insulating pad containing mica, a ceramic fiber-mica composite, and graphite according to Example 1 has excellent fire resistance and thermal diffusivity performance. Although it was confirmed that fire resistance and thermal diffusivity performance were improved with the addition of graphite, which is a carbon-based material, an insulating property tended to be degraded.

Therefore, in order to improve insulating properties, insulating pads were manufactured by changing the thicknesses of each of layers as shown in Table 2 below, and then fire resistance, thermal diffusivity, and insulating properties were evaluated.

**[Table 2]**

| | First layer | Second layer | Third layer |
|---|---|---|---|
| Example 1 | Mica | ceramic fiber-mica composite | carbon-based material (graphite) |
| Example 2 | Mica | ceramic fiber-mica composite | carbon-based material (graphite) (Increased thickness) |
| Example 3 | Mica | ceramic fiber-mica composite (Increased thickness) | carbon-based material (graphite) |

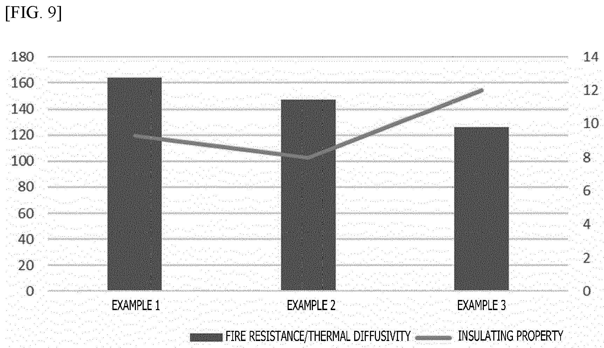

The evaluation results of the examples in Table 2 above are shown in the graph of FIG. 9. As shown in FIG. 9, as a result of increasing the thickness of the carbon-based thermal diffusion layer, it was evaluated that fire resistance and the thermal diffusivity was improved as compared to comparative examples, which are conventional products, but the insulating property was degraded. On the other hand, as a result of increasing the thickness of the swelling pressure absorption layer containing ceramic fiber and mica, it was evaluated that fire resistance, thermal diffusivity, and the insulating property were all improved as compared to the conventional products.

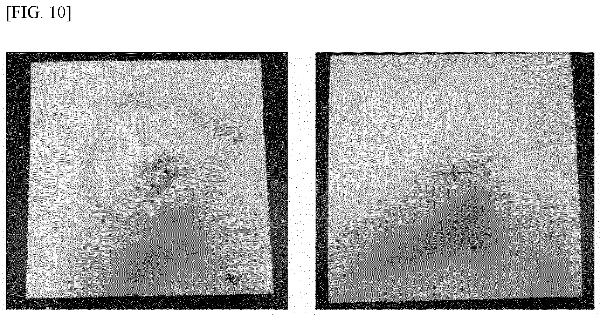

Further, as shown in FIG. 10, it can be confirmed that the insulating pads according to the embodiments of the present invention had no cracks or thermal damage, which are problems with conventional insulating pads.

In the battery module according to the present invention, it is possible to secure the performance of absorbing swelling pressure caused by cell swelling.

Since a pad does not crack or melt even at high temperatures, heat generated from a cell cannot be transferred to adjacent cells on the side, or even when the generated heat is transferred thereto, it is possible to protect the cell against the heat to the extent that the function of the cell is not damaged.

Even when a cell is vented, by preventing the venting of adjacent cells on the side to prevent ignition of nearby modules and cells and minimize the intensity of the flame, it is possible to minimize the application of other fire retardants or fire extinguishing materials.

Meanwhile, effects of the present invention are not limited to the above-described effects and other effects that are not described may be clearly understood by those skilled in the art from the above detailed descriptions.

While the present invention has been particularly described with reference to embodiments, the embodiments are only exemplary embodiments of the present invention. It will be understood by those skilled in the art that modified examples and applications in other forms may be made within the scope of the present invention defined by appended claims. For example, each component specifically shown in the embodiments may be modified and embodied. In addition, it should be understood that differences related to these modified examples and applications are within the scope of the present invention as defined in the appended claims.

## Claims

1. A battery module comprising:
a plurality of battery cells; and
an insulating pad having a multi-layer structure disposed between the battery cells,
wherein the insulating pad includes a swelling pressure absorption layer, an insulating fire-resistant layer, and a thermal diffusion layer,
wherein the swelling pressure absorption layer is a heat-resistant fiber-mica composite in a thin paper form including 10 to 50 wt% of mica, 10 to 50 wt% of ceramic fiber, and 10 to 40 wt% of aramid fiber,
the insulating fire-resistant layer is a mica sheet, and
the thermal diffusion layer includes a carbon-based material.

2. The battery module of claim 1, wherein the carbon-based material is one or more selected from among graphene, carbon nanotubes, and graphite.

3. The battery module of claim 1 or 2, wherein a thickness of the swelling pressure absorption layer is in a range of 10 to 35% of a total thickness of the insulating pad,
a thickness of the insulating fire-resistant layer is in a range of 35 to 45% of the total thickness of the insulating pad, and
a thickness of the thermal diffusion layer is in a range of 25 to 35% of the total thickness of the insulating pad.

4. The battery module of any one of claims 1 to 3, wherein a total thickness of the insulating pad ranges from 1.0 to 2.5 mm.

5. The battery module of any one of claims 1 to 4, wherein the insulating pad includes thermal diffusion layers stacked on both surfaces of the swelling pressure absorption layer and insulating fire-resistant layers stacked on the thermal diffusion layers.

6. The battery module of any one of claims 1 to 5, wherein the insulating pad includes insulating fire-resistant layers stacked on both surfaces of the swelling pressure absorption layer and thermal diffusion layers stacked on the insulating fire-resistant layers.

7. The battery module of any one of claims 1 to 6, wherein the insulating pad includes an insulating fire-resistant layer and a thermal diffusion layer sequentially stacked on one surface of the swelling pressure absorption layer, and an insulating fire-resistant layer stacked on the other surface of the swelling pressure absorption layer.

8. The battery module of any one of claims 1 to 7, wherein the insulating pad is made by performing heat fusing on the swelling pressure absorption layer, the insulating fire-resistant layer, and the thermal diffusion layer.

## Patentansprüche

1. Batteriemodul, umfassend:
eine Mehrzahl von Batteriezellen; und
ein Isolationspad mit einer Mehrschichtstruktur, das zwischen den Batteriezellen angeordnet ist,
wobei das Isolationspad eine Quelldruckabsorptionsschicht, eine isolierende feuerbeständige Schicht und eine Wärmediffusionsschicht umfasst,
wobei die Quelldruckabsorptionsschicht ein hitzebeständiger Faser-Glimmer-Verbundstoff in einer dünnen Papierform ist, der 10 bis 50 Gew.-% Glimmer, 10 bis 50 Gew.-% Keramikfaser und 10 bis 40 Gew.-% Aramidfaser umfasst,
die isolierende feuerbeständige Schicht eine Glimmerfolie ist, und
die Wärmediffusionsschicht ein kohlenstoffbasiertes Material umfasst.

2. Batteriemodul nach Anspruch 1, wobei das kohlenstoffbasierte Material aus einem oder mehreren Materialien besteht, die aus der Gruppe bestehend aus Graphen, Kohlenstoffnanoröhren und Graphit ausgewählt sind.

3. Batteriemodul nach Anspruch 1 oder 2, wobei eine Dicke der Quelldruckabsorptionsschicht in einem Bereich von 10 bis 35 % einer Gesamtdicke des Isolationspads liegt,
eine Dicke der isolierenden feuerbeständigen Schicht in einem Bereich von 35 bis 45 % der Gesamtdicke des Isolationspads liegt, und
eine Dicke der Wärmediffusionsschicht in einem Bereich von 25 bis 35 % der Gesamtdicke des Isolationspads liegt.

4. Batteriemodul nach einem der Ansprüche 1 bis 3, wobei eine Gesamtdicke des Isolationspads in einem Bereich von 1,0 bis 2,5 mm liegt.

5. Batteriemodul nach einem der Ansprüche 1 bis 4, wobei das Isolationspad Wärmediffusionsschichten, die auf beiden Oberflächen der Quelldruckabsorptionsschicht gestapelt sind, und isolierende feuerbeständige Schichten, die auf den Wärmediffusionsschichten gestapelt sind, umfasst.

6. Batteriemodul nach einem der Ansprüche 1 bis 5, wobei das Isolationspad isolierende feuerbeständige Schichten, die auf beiden Oberflächen der Quelldruckabsorptionsschicht gestapelt sind, und Wärmediffusionsschichten, die auf den isolierenden feuerbeständigen Schichten gestapelt sind, umfasst.

7. Batteriemodul nach einem der Ansprüche 1 bis 6, wobei das Isolationspad eine isolierende feuerbeständige Schicht und eine Wärmediffusionsschicht, die nacheinander auf einer Oberfläche der Quelldruckabsorptionsschicht gestapelt sind, und eine isolierende feuerbeständige Schicht, die auf der anderen Oberfläche der Quelldruckabsorptionsschicht gestapelt ist, umfasst.

8. Batteriemodul nach einem der Ansprüche 1 bis 7, wobei das Isolationspad durch Heißverschmelzen der Quelldruckabsorptionsschicht, der isolierenden feuerbeständigen Schicht und der Wärmediffusionsschicht hergestellt wird.

## Revendications

1. Module de batterie comprenant:
une pluralité d'éléments de batterie; et
un coussin isolant à structure multicouche disposé entre les éléments de la batterie,
dans lequel le coussin isolant comprend une couche d'absorption de pression de gonflement, une couche isolante résistante au feu et une couche de diffusion thermique,
dans lequel la couche d'absorption de pression de gonflement est un composite fibre-mica résistant à la chaleur, se présentant sous la forme d'un papier fin et comprenant 10 à 50 % en poids de mica, 10 à 50 % en poids de fibre céramique et 10 à 40 % en poids de fibre aramide,
la couche isolante résistante au feu est une feuille de mica, et
la couche de diffusion thermique comprend un matériau à base de carbone.

2. Module de batterie selon la revendication 1, dans lequel le matériau à base de carbone est un ou plusieurs éléments choisis parmi le graphène, les nanotubes de carbone et le graphite.

3. Module de batterie selon la revendication 1 ou 2, dans lequel l'épaisseur de la couche absorbant la pression de gonflement est comprise entre 10 et 35 % de l'épaisseur totale du coussin isolant,
l'épaisseur de la couche isolante résistante au feu se situe dans une fourchette comprise entre 35 et 45 % de l'épaisseur totale du coussin isolant, et
l'épaisseur de la couche de diffusion thermique se situe dans une plage comprise entre 25 et 35 % de l'épaisseur totale du coussin isolant.

4. Module de batterie selon l'une quelconque des revendications 1 à 3, dans lequel l'épaisseur totale du coussin isolant est comprise entre 1,0 et 2,5 mm.

5. Module de batterie selon l'une quelconque des revendications 1 à 4, dans lequel le coussin isolant comprend des couches de diffusion thermique empilées sur les deux faces de la couche d'absorption de pression de gonflement, ainsi que des couches isolantes résistantes au feu empilées sur les couches de diffusion thermique.

6. Module de batterie selon l'une quelconque des revendications 1 à 5, dans lequel le coussin isolant comprend des couches isolantes résistantes au feu empilées sur les deux faces de la couche d'absorption de pression de gonflement, ainsi que des couches de diffusion thermique empilées sur les couches isolantes résistantes au feu.

7. Module de batterie selon l'une quelconque des revendications 1 à 6, dans lequel le coussin isolant comprend une couche isolante résistante au feu et une couche de diffusion thermique empilées successivement sur une surface de la couche d'absorption de pression de gonflement, ainsi qu'une couche isolante ignifuge empilée sur l'autre surface de la couche d'absorption de pression de gonflement.

8. Module de batterie selon l'une quelconque des revendications 1 à 7, dans lequel le coussin isolant est composé par fusion thermique sur la couche d'absorption de pression de gonflement, de la couche isolante résistante au feu et de la couche de diffusion thermique.
